# EUROPEAN PATENT APPLICATION

(11) **EP 2 439 253 A1**
(43) Date of publication of application: **11.04.2012**
(21) Application number: 10186572.3
(22) Date of filing: 05.10.2010
(51) Int. Cl.: C10G 45/08, C10G 45/12, B01J 23/85, B01J 21/04, B01J 35/00, B01J 35/10

(54) **Hydrodesulfurization nanocatalyst comprising a support of nanotube / nanorod alumina, method of preparation and application**

(71) Applicant: Research Institute of Petroleum Industry (RIPI), 18799 Tehran (IR)
(72) Inventor: Rashidi, Fereshteh, 1997763551, Tehran (IR); Rashidi, Alimorad, Tehran (IR); Jafari Jozani, Kheirollah, Karaj (IR); Nemati Kharat Ghaziani, Ali, Tehran (IR); Rezapour, Morteza, 1441993994, Tehran (IR); Bozorgzadeh, Hamidreza, Tehran (IR)
(74) Representative: Fuchs

(57) **Abstract**

The present invention relates to a hydrodesulfurization (HDS) nanocatalyst, use of the hydrodesulfurization nanocatalyst in a hydrodesulfurization process and a process for the production of a hydrodesulfurization nanocatalyst.

## Description

The present invention relates to a hydrodesulfurization (HDS) nanocatalyst, use of the hydrodesulfurization nanocatalyst in a hydrodesulfurization process and a process for the production of a hydrodesulfurization nanocatalyst.

Sulfur containing compounds present in oil derivatives and fuels can lead to air pollution and acid rains due to the fact that sulfur-based acids are one of the major causes of this phenomenon. The sulfur containing compounds are commonly emitted through the application of different fuels, including gas oil and gasoline. The presence of high concentrations of sulfur containing compounds in oil derivatives can lead to corrosion in containers, reactors, pipes and metal joints and also poison the valuable catalysts in downstream processes.

Gasoline and gas oil constitute a proportion of about 75 to 80 % of all refinery products and most of the known desulfurization processes are meant to remove sulfur containing compounds from these products. It is needless to mention that low-sulfur gas oil is harder to produce due to the fact that gas oil produced through catalytic fluidized bed cracking and coke formation contains about 2.5% wt of sulfur with low cetane number, high density and high aromatic content.

Removal of sulfur is possible to some extent by conventional processes utilizing CoMo, NiMo and CoNiMo catalysts over alumina support. Alumina is widely used due to its good mechanical properties and surface properties. Another important property of alumina is its ability for good distribution of active metals thereon which helps especially in the case of gas oil hydrodesulfurization catalysts.

One of the drawbacks of using alumina as support material, especially alumina supports of micro scale size, for hydrodesulfurization processes is the formation of coke, which in turn reduces the catalyst lifetime, leading to frequent and compulsory change of the catalytic bed in the reactor. Another drawback is the strong interaction of the alumina support with metal oxides, which is so strong that it decreases the sulfidation yield. This impedes formation of sulfur multi layers and leads to decrease in the surface area of the catalyst. The surface area in desulfurization catalysts is defined as being the surface occupied with the active group metals.

Hydrodesulfurization Al₂O₃/CoMo catalysts and hydrodesulfurization Al₂O₃/NiMo catalysts have been subject to numerous studies, and their catalytic parameters including desulfurization yield, activity and selectivity, the type of catalyst used, reaction conditions (sulfidation methods, temperatures, H₂ and H₂S partial pressures), nature and concentrations of the sulfur containing impurities in the feed and reactor as well as process properties have been investigated.

EP 0 969 075 A1 describes the use of group VI and group VIII metals over alumina support for preparation of hydrodesulfurization catalysts for diesel fractions. The most active catalyst (B1) is based on alumina support with a surface area of 372 m²/g, a pore volume of 0.65 cm³/g; it is loaded with 25% wt of molybdenum and cobalt oxides, 3% wt of P₂O₅ and 5% wt of HY zeolite having a surface area of 267 m²/g, pore volume of 0.45 cm³/g and an average pore size of 7.8 nm. The catalyst is reported to work in 350°C, 3.5 MPa with a Liquid Hourly Space Velocity (LHSV) of 1.5 h⁻¹ and is found to reduce the sulfur content of the feed from 13500 ppm to 140 ppm. Catalyst E based on alumina support with a surface area of 243 m²/g, pore volume of 0.41 cm²/g is loaded with 30% wt of molybdenum and cobalt oxides, 3% wt of P₂O₅ and 5% wt of HY zeolite having a surface area of 267 m²/g, a pore volume of 0.455 cm²/g and an average pore size of 7.8 nm. The catalyst is reported to work in 340°C, 3.5 MPa with a LHSV of 1.5 h⁻¹ and is found to reduce the sulfur content of the feed from 13500 ppm to 228 ppm.

The most active catalyst in WO 99/673455, as mentioned in example 15, is supported on alumina with surface area of 214m²/g, pore volume of 0.41 cm²/g and pore diameter of 7.6 mm, containing 20.44% wt of molybdenum and cobalt oxides and is found to reduce the sulfur content of the feed from 12286 ppm to 115 ppm under 4 MPa of pressure, 354°C and a LHSV of 1.35 h⁻¹.

EP 1 832 645 A1 discloses the construction of catalysts containing 16% wt of molybdenum and cobalt oxides, which is claimed to reduce the sulfur content of the feed from 11600 ppm to 6.5 ppm under 345°C, very high pressure of 7 MPa, high_H₂/feed of 440 Ncm³/cm³ and low LHSV of 1.2h⁻¹.

US 2002/0070147 A1 discloses the construction of catalysts containing 25% wt of molybdenum and cobalt oxides and 3% wt of P₂O₅ which reduces the sulfur content of the feed from 12000 ppm to 21 ppm under 330°C, 4 MPa, high H₂/feed of 300 Ncm³/cm³ and space velocity of 2h⁻¹ after being sulfidized with a 2.5% DMDS solution.

The general drawbacks of common hydrodesulfurization catalysts based on alumina are clogging of the catalyst and non-homogeneous distribution of active metals. High metal loadings are not possible in these catalysts. This makes the resulting catalysts incapable of working in high concentrations of dibenzothiophenes and alkyl dibenzothiophenes. This in turn necessitates application of rather harsh operating conditions in case of feeds containing high amounts of sulfur, in addition to low LHSV, high pressure and high H₂/feed ratios, which in turn increase coke formation. Coke formation reduces catalyst lifetime due to blockade of active sites of the catalyst. This evidently inversely influences the economics of such processes.

It is the object of the present invention to provide hydrodesulfurization nanocatalysts that overcome the problems of the prior art catalysts. The catalysts according to the present invention have better activities when compared to conventional catalysts and therefore increase hydrodesulfurization yield.

The catalysts according to the present invention comprise nanostructured alumina material which has larger pores and mesoporosity and, therefore, better distributions of active metals over the nanostructured alumina material, a better presence of multilayer nanoclusters of the active metals and also a better formation of active sites when compared to prior art catalysts. Furthermore, the catalysts according to the present invention reduce coke formation during hydrodesulfurization processes and, hence, have increased lifetime. In addition, the present invention provides catalysts which work with relatively lower H₂/feed ratios in the sulfidation and/or hydrodesulfurization process. It is also an aspect of the present invention to provide catalysts that function under relatively mild operating conditions when compared to conventional catalysts.

The present invention refers to a hydrodesulfurization nanocatalyst comprising a support and active metals, wherein the support is nanostructured alumina material, and at least one active metal selected from the group VIB of the periodic table of elements and at least one active metal is selected from the group VIIIB of the periodic table of elements.

According to a preferred embodiment of the present invention the nanostructured alumina material is selected from the group consisting of alumina nanorods, alumina nanotubes and mixtures thereof. In a preferred embodiment the alumina is gamma-alumina. The nanostructured alumina material is a porous system. The support is used in form of particles, wherein the particles have nanometer sizes. The particles are preferably sized between 1 and 100 nanometers.

Preferably the nanostructured alumina material has surface area of from 450 to 800 m²/g, more preferred are surface areas of from 500 to 650 m²/g. In a further preferred embodiment, the nanostructured alumina material has pore volumes of from 0.8 to 3 cm³/g, more preferred are pore volumes of from 0.9 to 2.5 cm³/g.

The alumina material is preferably a mesoporous material. Mesoporous material means that the material has a mesoporous pore diameter of from 2 to 50 nm, more preferably from 9 to 30 nm, most preferably from 10 to 20 nm. The pore volumes and pore diameters are larger and more easily controllable compared to the pore volumes and pore diameters of conventional catalysts.

The control of textural properties (surface areas, pore volumes, pore sizes), morphologies and particle sizes is of the greatest interest to improve the potential of alumina in catalysis. The optimization of some properties, for example, increasing the specific surface area and creating unsaturated alumina species (Al^{V} and Al^{IV}), which are acid centers able to catalyze chemical reactions are important. Moreover, the tunable pore sizes and the high total pore volume make it possible for the nanostructured alumina materials to be ideal supports for heterogeneous catalysis that needs to load high amounts of at least two metals without agglomeration in the hydrodesulfurization nanocatalyst.

The group VIB metal is hereinafter referred to as "the VIB metal". The VIB metal is preferably selected from the group consisting of Cr, Mo, W and tungsten. It is further preferred that the VIB metal is molybdenum and/or tungsten, preferably molybdenum. The VIB metal is preferably in form of oxides and/or sulfides, preferably oxides. It is preferred that the VIB metal is in form of nanoclusters. Nanoclusters in the present invention are groups of atoms or molecules whose largest overall dimension is typically in the range of from 1 and 100 nanometers. Nanoclusters have at least one dimension between 1 and 10 nanometers and a narrow size distribution.

The group VIIIB metal is hereinafter referred to as "the VIIIB metal". The VIIIB metal is preferably selected from the group consisting of Fe, Ru, Os, Co, Rh, Ir, Ni, Pd, Pt and mixtures thereof. It is further preferred that the VIIIB metal is cobalt and/or nickel, preferably cobalt. The VIIIB metal is preferably in form of oxides and/or sulfides, preferably oxides. It is preferred that the VIIIB metal is in form of nanoclusters.

The most preferred active metals are cobalt and molybdenum. Cobalt and molybdenum are more active than for example W and Cr for removing sulfur compounds from oil containing high amounts of sulfur compounds. Furthermore, cobalt and molybdenum are cheaper than other metals like W, Ir, Rh, Pt, Pd, Os and Ru; so they are economically attractive as well.

In a further embodiment the catalyst of this invention contains nickel and molybdenum as active metals. Such a catalyst is even capable of removing nitrogen compounds from oil that contains high amounts of nitrogen compounds.

The content of the VIB metals and VIIIB metals in the catalyst according to the present invention is preferably 1 to 30 % by weight, more preferably 8 to 30 % by weight. In an alternative embodiment the content of the VIB metals and VIIIB metals in the catalyst according to the present invention is preferably 6 to 22 % by weight, more preferably 16 to 22 % by weight. The weight percentages are relative to the weight of the whole catalyst.

The content of the VIB metals in the catalyst according to the present invention is preferably 7 to 22 % by weight, more preferably 10 to 15 % by weight.

The content of the VIIIB metals in the nanocatalyst according to the present invention is preferably 1 to 8 % by weight, more preferably 6 to 7 % by weight.

Preferably, the nanocatalyst according to the present invention comprises the VIB metal and the VIIIB metal in a molar ratio (VIB:VIIIB) of 0.03:1.9, most preferably of 0.2:0.5.

It is according to a preferred embodiment of the present invention that the active metals are present on the nanostructured alumina material in form of multilayer nanoclusters. Preferably the nanoclusters of the metals loaded on the nanostructured alumina material have diameters in the range of from 1 to 10 nm, more preferably in the range of from 3 to 7 nm. Preferably each nanocluster of the metals loaded on the nanostructured alumina material has 2 to 8 layers (slabs), more preferably 3 to 6 layers (slabs).

In a preferred embodiment of the present invention the nanoclusters comprise Co₉S₈ which is preferably derived from the slab-like (sheet-like) crystalline structure of MoS₂. MoS₂ has slab-like morphology on support materials. Promoter atoms like Co, Ni are located at the edges of the MoS₂ slabs (sheets). The derived active CoMoS or NiMoS nanoclusters exist in monolayered (CoMoS type I) or multi-layered (CoMoS type II) morphologies on the support material.. Nanoclusters have at least one dimension between 1 and 10 nm and a narrow size distribution. The hydrodesulfurization activity has been attributed to CoMoS or NiMoS sites located on the edges of the MoS₂ nanoclusters. The multi-layered MoS₂ nanoclusters are promoted with Co or Ni atoms. These MoS₂ nanoclusters deviate considerably in geometry and electronic structure from what is commonly assumed from the bulk properties of MoS₂. Moreover, the morphology and orientation (basal-bonded or edge-bonded) of CoMoS or NiMoS on the support material markedly affects the hydrotreating activity of the catalysts.

The activity in the nanocatalyst is related to the presence of so-called CoMoS, NiMoS, CoWS and NiWS structures that consist of small MoS₂ or WS₂ nanoclusters with Co or Ni promoter atoms located at the edges. Preferred catalysts of this invention comprise the active metals in such nanoclusters.

The modification of the textural properties (surface area, pore volume and pore diameter) of the nanostructured alumina material induces variations in dispersion and morphology of active components and possible interactions between metals and nanostructured alumina material, which may change the activity and/or selectivity of the catalysts. The density of CoMoS phases on the catalyst directly influences the catalytic activity. Also the morphology of the MoS₂ phase is important to the hydrodesulfurization activity.

According to an embodiment of the present invention the hydrodesulfurization nanocatalyst of the present invention contains at least one additional metal selected from the group VIIIB in form of oxides as promoters of the nanocatalyst, which is referred to as the "second VIIIB metal".

Furthermore, it is preferred that the nanocatalyst according to the present invention further comprises an additional compound of group IIIA and/or group VA. The compound of group IIIA is hereinafter referred to as "the IIIA compound". The IIIA compound comprises B, Al, Ga, In and/or TI. Preferably, the IIIA compound is a boron compound. Preferably, the IIIA compound is B₂O₃. It is preferred that boric acid is used to form B₂O₃. The content of the IIIA compound in the nanocatalyst according to the present invention is preferably 1 to 5% by weight, more preferably 2.5 to 3.5 % by weight. The IIIA compound leads to improvement of the acidity of the catalyst which decreases interaction of the metals with the nanostructured alumina material and produces highly active sites, since it induces formation of the multilayered active metal on the support. The IIIA compound improves the acidity of alumina and increases the cracking, isomerization and HDS/HYD (hydrodesulfurization/hydrogenation) reactions to overcome the sterically hindered adsorption of 4,6-dimethyldibenzothiophene (4,6-DMDBT) molecules in deep oils. Furthermore, the IIIA compound can improve the dispersion of the active metals on the surface of nanostructured alumina material by decreasing interaction between and the metals and the nanostructured alumina material which facilitates sulfide formation.

The catalyst preferably comprises a compound of group VA that is hereinafter referred to as "the VA compound". The VA compound is selected from the group consisting of N and P. Preferably, the VA compound comprises phosphorous. Preferably, the VA compound is P₂O₅. It is preferred that phosphoric acid is used to form P₂O₅. The content of VA compound in the nanocatalyst according to the present invention is preferably 1 to 5 % by weight. The VA and the IIIA compounds lead to improvement of acidity of the catalyst which decreases interaction of the active metals with the nanostructured alumina material so that highly active catalytic sites can be obtained, since it induces formation of the multilayered nanoclusters. Phosphorous modifies the distribution of catalytic sites to facilitate the formation of multilayer nanoclusters, changes the surface hydroxyl groups and decreases the polymerization of Mo-S bonding, to obtain higher hydrodesulfurization nanocatalyst activity. Phosphorous also improves the catalytic Bronsted acidity allowing the migration of methyl groups in 4,6-DMDBT to decrease the sterically hindered adsorption.

According to an embodiment of the present invention, the catalyst comprises zeolite. It is preferred that the catalyst comprises zeolite Y. Preferably, the zeolite Y is HY and/or USY. HY and USY have acidic properties. Since the Bronsted acidity of HY is higher than USY, HY is preferred. In a further preferred embodiment, the catalyst comprises zeolite Y in an amount of 1 to 5 % by weight. The acidic zeolite facilitates isomerization of alkylated DBT (dibenzothiophene), resulting in enhanced hydrodesulfurization activity of refractory sulfur compounds. The acidification significantly helps to overcome the sterically hindered adsorption of 4,6DMDBT molecules in deep oils.

The addition of high percentages of acids like zeolite leads to beneficial acidic catalyst. However some catalysts are significantly deactivated by coking. Furthermore, the addition of only low amounts of zeolite (below 1 % by weight) is not sufficient to increase the activity. Therefore, it is preferred to combine at least one IIIA and/or VA compound and zeolite.

According to a preferred embodiment of the present invention, the catalyst comprises zeolite HY and B₂O₃; preferably in a ratio of about 1:0.5. Preferably the total content of zeolite HY and B₂O₃ in the catalyst is 1 to 10 % by weight.

The hydrodesulfurization nanocatalyst according to the present invention is particularly suited to be used in a process for hydrodesulfurization. It is particularly preferred that the nanocatalyst according to the present invention is used in a hydrodesulfurization process of hydrocarbon feeds with a boiling point range of 40 to 450°C, wherein the preferred hydrocarbon feeds are light and heavy naphtha, gasoline and gas oil. According to a further embodiment, the nanocatalyst according to the present invention is preferably used for hydrodesulfurizing residues of crude oil and sand oil.

Furthermore, the hydrodesulfurization nanocatalyst according to the present invention is particularly suited to be used for the hydrodesulfurization of oil residues, light and heavy crude oil, sand oil, oil fractions with a boiling point range of 40 to 450°C, light and heavy naphtha, gasoil, and furnace oil with a sulfur amount of up to 5 % by weight.

The present invention also refers to a process for the production of a nanocatalyst according to the present invention, comprising the steps of:
a) Providing a solution of at least one of the metals mentioned above,
b) Impregnating the nanostructured alumina material in the solution of at least one metal, and
c) Drying the resulting catalyst.

According to preferred embodiments of the present invention, the solution of at least one metal is an aqueous solution; most preferably the solvent is water. Preferred is that the solution comprises two metals. According to preferred embodiments of the present invention, the solution additionally comprises an acid which is preferably phosphoric acid and/or boric acid and/or citric acid.

In a preferred embodiment of the process according to the present invention the solution of at least one metal additionally comprises at least one chelating agent. The chelating agent is preferably chosen from the group consisting of citric acid, polyethylene glycol, malic acid, nitrilotriacetic acid (NTA), ethylenediamintetraacetic acid (EDTA), cyclohexanediaminetetraacetic acid (CyDTA), ethylenediamine (ED), polyethylene glycol (PEG) and tartaric acid. It is further preferred that the chelating agent is citric acid, polyethylene glycol or malic acid, preferably citric acid. These inexpensive organic carboxylic compounds easily form stable complexes with the metal ions and do not change into noxious nitrogen-containing fumes during hydrodesulfurization conditions. The chelating agent which is added to the impregnation solution during the preparation of the nanocatalyst increases the catalytic activity of the hydrodesulfurization nanocatalyst.

In a preferred embodiment of the process according to the present invention, a salt is used for the preparation of the solution of the present invention. The salt is preferably chosen from a group of water soluble salts of the metals used, including but not limited to cobalt nitrate, acetate, carbonate, sulfate, thiocyanate, acetyl acetonate and/or nickel nitrate, acetate and/or carbonate and/or ammonium heptamolybdate, molybdenum oxide, sodium molybdate, or any mixtures thereof. A salt comprising the metals Co and/or Mo is most preferred.

In a further preferred embodiment, the metal is in the form of oxides and/or sulfides and/or organometallic compounds. The metals are preferably selected from the group consisting of Co, Ni and Mo. Preferably the organometallic compound is chosen from the group consisting of Mo(CO)₆, Co(CO)₃NO, Co₂(CO)₈, Ni(CO)₄, Cp₂Ni, Cp₂Co, nickel stearate and nickel oleate, preferably Mo(CO)₆. It is further preferred that the application of the metal in the form of an organometallic compound provides controllable formation of metal oxides and/or sulfides nanostructures on the nanostructured alumina material.

In another embodiment of the process according to the present invention, a solution comprising at least one metal selected from the group consisting of VIIIB metals and/or VIB metals and/or IIIA metals and/or VA metals is used for impregnating these metals on the nanostructured alumina material.

In another embodiment of the present invention, the organometallic compounds are used in form of metal oxides and/or sulfides which are synthesized in nano-scale through methods such as chemical vapor deposition (CVD), hydrothermal, sol-gel and/or microemulsion and to be dispersed over the nanostructured alumina. In a further preferred embodiment, the chemical vapor deposition (CVD), hydrothermal, sol-gel and/or microemulsion techniques can be used for the deposition of the metal structure on the nanostructured alumina material. Preferably the metal structure on the nanostructured alumina material is in the form of nanoclusters.

In a preferred embodiment of the process according to the present invention, the nanostructured alumina material is prepared through a co-precipitation method in combination with CVD method which includes preparation of nanostructured alumina material from an alkaline solution, aluminum inorganic salts and organic additives. Preferably the alkaline solution comprises ammonia, urea and/or hexamethylenetetramine (HMTA). It is further preferred that the alkaline solution comprises urea and ammonia. Preferably the aluminum inorganic salt is chosen from the group of aluminum nitrate, chloride and/or sulfate. It is further preferred that the aluminum inorganic salt is chloride. Preferably the organic additive is selected from the group sorbitol, ammonium acetate, citric acid, EDTA, NTA, ethylene glycol (EG), PEG, malic acid, tartaric acid, CyDTA, ED and EN. It is further preferred that the organic additives are selected from the group sorbitol and citric acid. The molar ratio of aluminum solution: alkaline solution is preferably about 1:5, more preferably about 2:3. The molar ratio of aluminum solution: organic additive is preferably about 1:3, more preferably about 1.5:2.5. The pH of the solution is preferably 6 to 10, more preferably 8 to 9.

According to a preferred embodiment of the present invention, the nanostructured alumina material is prepared with one-dimensional interconnected nanorod-like mesostructures, through a non-toxic and non-surfactant-templating route by using the sol-gel method from aluminum alkoxides, organic solvents, organic acid or inorganic acid, and water. It is preferred that the nanostructured alumina material is produced in particles that have particle sizes of from 1 to 10 nm by dimension, more preferably 2 to 5 nm by dimension. In a further preferred embodiment the nanostructured alumina material has a length of 1 to 100 nm, more preferably 5 to 60 nm. It is preferred that the aluminum alkoxides are selected out of the group tri-iso-propoxide, sec-butoxide and etoxide. It is preferred that the aluminum alkoxide is aluminum tri-iso-propoxide. It is further preferred that the organic solvents are selected from the group tartaric acid, citric acid, malic acid, lactic acid and acetic acid. It is preferred that the organic solvent is citric acid. It is further preferred that the inorganic acid is selected out of the group H₂SO₄ and H₃PO₄. It is preferred that the inorganic acids are H₂SO₄ and H₃PO₄.

Apparently, the textural properties of alumina materials depend on preparations methods and conditions.

It is preferred that textural parameters, size of particles and morphology of the nanostructured alumina material of the present invention can be tuned through control of hydrolysis and condensation rates and by variation of temperatures, concentration, type of alkoxide, and water-to-alkoxide ratio, aging time, drying conditions, calcinations temperature, and atmosphere could affect the texture of the nanoparticles of alumina prepared by the sol-gel technique. Variation of these parameters affects the hydrolysis, condensation and polymerization of the aluminum alkoxide, thus modifying the properties of the final nanostructured alumina material, such as crystallinity, structure, morphology and texture.

It is further preferred that the nanostructured alumina material is prepared from aluminum alkoxides-derived gels or aluminum inorganic salts in the presence of organic additives or organic solvents. Preferably the particle size, morphology (like nanorod, nanotube, nanoparticles), surface area, pore volumes, pore diameters, uniform pore sizes, large amount of aluminum defect centers (Al^{V}), thermal stability as well as the textural properties of the resulting powders can be tuned by adjusting the synthesis conditions such as pH, Al to water ratio, Al to acid ratio, Al to organic additive ratio, temperature, organic additives type, concentration, alkoxide type and drying condition.

According to a preferred embodiment of the present invention, the nanostructured alumina material is provided by extruding without a binder. The binder would block a portion of the pores of the nanostructured alumina material. As the binder is to be removed by an additional heating step which leads to larger crystallinity, the active surface area decreases. Furthermore, the production of a nanostructured alumina material without a binder is more economical since the heating step is omitted.

According to a preferred embodiment of the process according to the present invention, impregnating means that the nanostructured alumina material is immersed in the solution of at least one metal. In a further preferred embodiment of the process according to the present invention, impregnating implies that the nanostructured alumina material is prepared in situ in the solution of at least one metal. The in situ preparation method for nanostructured alumina materials happens in a solution of at least one metal, through a co-precipitation method in combination with CVD method, where the reaction solution contains aluminum oxide precipitated from alkaline solution, aluminum inorganic salts and organic additives and the metal ions in the solution are directly impregnated on the nanostructured alumina materials. The alkaline are selected from the group ammonia, urea and HMTA. The inorganic salts are selected from the group nitrate or chloride and the organic additives are selected for example from the group sorbitol, ammonium acetate, EDTA and NTA.

In a preferred embodiment of the present invention, the solution of at least one metal is dispersed onto the nanostructured alumina material in consecutive impregnation steps.

In another embodiment of the process according to the present invention, any method leading to the formation of nanoclusters on the nanostructured alumina material, like impregnation, can be used for preparing the nanocatalyst of the present invention.

In a preferred embodiment of the process of the preparation of the nanocatalyst according to the present invention, the nanoclusters are formed on the nanostructured alumina material by controlled co-precipitation or impregnation, preferably impregnation. The impregnation is preferred since it is economically more attractive. The preferred immersion methods of nanostructured alumina materials are wet or dry incipient pore-volume co-impregnation, more preferably wet incipient pore-volume co-impregnation.

According to a preferred embodiment of the process according to the present invention, the drying step takes place at a temperature of between 50°C to 200°C, preferably 100°C to 150°C and most preferably at 120°C. In a further preferred embodiment of the process according to the present invention, the drying step is performed for 4 to 34 hours, preferably between 5 to 15 hours and most preferably for 6 to 12 hours.

In an embodiment of the process according to the present invention, the resulting catalyst is shaped. The catalyst according to the present invention preferably is in the form of tablets and/or certain size fractions obtained by sieving the catalyst. The catalyst has preferably a mesh size of 20/10. It is necessary to use the catalyst in defined shapes and/or sizes in order to prevent the reactor from choking and to avoid the blockage of the reactor.

Preferably the resulting catalyst is extruded. More preferably the nanocatalyst of the present invention does not require any extrusion processes after preparation Thereby the formation of active sites with monolayer structures and lower catalytic activity due to lower surface area is avoided as heating at high temperatures to stabilize the nanocatalyst for the use in high pressure of hydrodesulfurization reactions decomposes the chelated metals/chelating reagents. The extruded nanostructured alumina material of the present invention only requires to be dried at low temperatures after preparation of the nanocatalyst which additionally leads to the formation of active sites with multilayer structures and higher catalytic activity.

Preferably the nanocatalyst of the present invention does not require a calcination step prior to sulfidation and thereby the activities of the multilayer catalytic species increase. Furthermore, the chelating reagents decompose less than catalysts which require a calcination step prior to sulfidation.

In a special embodiment of the process according to the present invention, the process additionally comprises the step of sulfidizing the catalyst. This sulfidizing step may take place in any reactor independently of the shape or structure of the reactor, preferably in a fixed bed reactor. It is particularly preferred that the reactor is a steel reactor. The reactor preferably has an inner diameter between 0.5 cm and 10 cm, preferably between 1 cm to 5 cm, more preferably between 1.5 cm to 2.5 cm and most preferably of 1.58 cm. The reactor preferably has an outer diameter between 0.5 cm and 15 cm, preferably between 1 to 10cm, more preferably between 1.8 cm to 6 cm and most preferably of 2.13 cm. The reactor preferably has a thickness between 0.1 cm and 6 cm, preferably between 0.15 cm and 3 cm, most preferably of 0.28 cm. The reactor preferably has a length between 30 cm and 70 cm, preferably between 40 cm and 60 cm, more preferably between 48 cm and 55 cm most preferably of 52 cm. Sulfidizing may be conducted in the presence of any hydrocarbon fraction that comprises a sulfur containing species.

The hydrocarbon fraction that is preferably used in this invention is an isomax fraction comprising 1 to 2 % by weight of dimethyl disulfide, preferably 1 % by weight of dimethyl disulfide.

Isomax is the product of the "isomax unit" in oil refineries. In an "isomax unit", heavy hydrocarbons such as fuel oil and vacuum gas oil are converted (cracked) to light and valuable products such as middle distillates. The isomax process takes place at high temperatures and pressures, and hence the sulfur content of isomax is very low.

Sulfidation preferably takes place at a liquid hourly space velocity (LHSV) of 1 to 5 h⁻¹. In a further embodiment, sulfidation takes place at a pressure of 0.1 to 7 MPa. The temperature at which the sulfidation preferably is done is 200°C to 450°C. The hydrogen/hydrocarbon ratio is between 100 and 500 Nm³/m³, preferably in the range from 150 to 250 Nm³/m³.

The present invention further refers to a process for hydrodesulfurizing petroleum products by application of a catalyst according to the present invention. Hydrodesulfurization is among the processes used for treating sulfur-containing gas and oil streams in refineries. According to the process the sulfur-containing hydrocarbon streams are treated over a catalytic bed, under different operating conditions that are dictated by their nature (check the table below for the operating conditions corresponding to some typical hydrocarbon streams). A hydrodesulfurization process is performed in the presence of H₂-containing gas, which reacts with the sulfur-containing compounds and converts them to H₂S which is later neutralized and separated. The hydrodesulfurization reaction is expressed, for example for ethanethiol (C₂H₅SH), which is a sulfur compound present in some petroleum products, as:

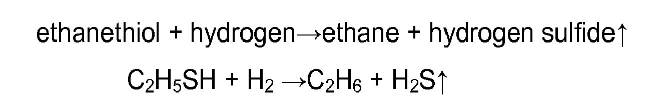

**Table 1- Typical operating conditions**

| Fuel | Temperature/°C | Pressure /MPa | Liquid Hourly Space Velocity /h⁻¹ |
|---|---|---|---|
| Naphtha | 100-370 | 1-5.5 | 0.5-10 |
| Diesel (gasoline) | 200-400 | 1.7-10.3 | 0.5-4 |
| Heavy diesel (gasoline) | 260-430 | 1.7-17.2 | 0.3-2 |
| Lubrication oil | 200-450 | 0.7-20.1 | 0.2-5 |
| Distillation residue | 340-450 | 6.9-34.5 | 0.1-1 |

It is an advantage of the nanocatalyst according to the present invention that the production of the nanocatalyst does not require a calcination step and that the nanocatalyst works properly even at conditions that are milder than the typical operating conditions of prior art catalysts. Especially, the catalyst of the present invention may be used in a process that is run at pressures between 0.1 and 7 MPa, at temperatures between 250 to 400°C, LHSV of 1 to 5 h⁻¹ and a hydrogen/hydrocarbon ratio between 100 and 500 Nm³/m³. A further advantage is that the catalyst of the present invention may be used with a broad variety of feedstocks. Especially, the present catalyst can be used in order to desulfurize hydrocarbon feedstocks with boiling points in the range from 40 to 450°C.

In a preferred embodiment of the present invention the nanocatalyst may be used in a process that is run at pressures between 3 to 5 MPa, at temperatures between 250 to 350 °C, LHSV of 1.5 to 3 h⁻¹ and a hydrogen/hydrocarbon ratio between 200 and 300 Nm³/m³.

The present invention also refers to a process of using the nanocatalyst according to the present invention for hydrodesulfurization with the following parameters:
a) at pressures between 0.1 to 7 MPa
b) at temperatures between 250 to 400°C
c) LHSV of 1 to 5 h⁻¹, and
d) a hydrogen/hydrocarbon ratio between 100 and 500 Nm³/m³.

In a further embodiment, the use of the nanocatalyst according to the present invention takes place at pressures between 0.1 to 7 MPa. The temperature at which the nanocatalyst preferably is used is between 250 to 400°C. The use of the nanocatalyst according to the present invention preferably takes place at a LHSV of 1 to 5 h⁻¹. The hydrogen/hydrocarbon ratio is between 100 and 500 Nm³/m3.

Preferably the nanocatalyst of the present invention is used in a hydrodesulfurization process.

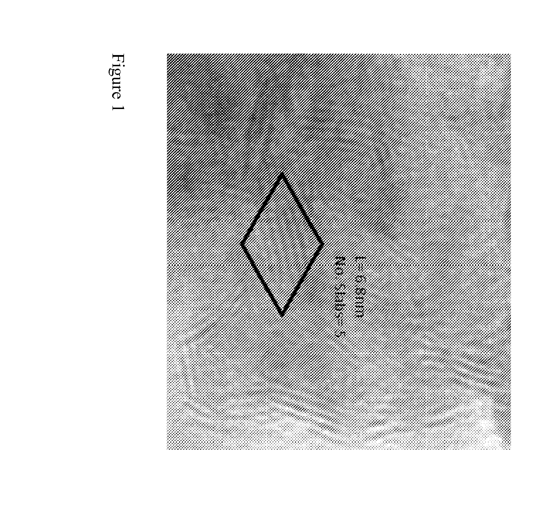

Figure 1 shows that a multi-layered (3 to 6 layers) morphology of CoMoS with a 3 to 7 nm length is formed on the nanostructured alumina material. As shown in Fig. 1 the CoMoS type II which is located at the edges of multilayers of MoS₂ would be much more accessible to large molecules than CoMoS type I, which is located at the edges of the single layer of MoS₂. So the use of the nanostructured alumina material with high surface area, modified acidity and lower interactions between metals and the nanostructured alumina material helps the high dispersion of high density of CoMoS type II phases. On a multilayered support material with higher surface area, pore volume and pore diameter more active sites per nanostructured alumina material exist, which is one of the important reasons for the higher catalytic activity compared to nanocatalysts having alumina support material with a monolayered morphology. Furthermore, the multilayered CoMoS nanoclusters respond to the more active sites with a higher DBT hydrodesulfurization activity due to a less steric hindrance for the adsorption of the reactant molecules.

### Examples:

The examples illustrate some preferred embodiments of the present invention. They do not limit the scope of the invention.

### Example 1: The effect of citric acid and zeolite in the absence of phosphorous

A solution of 3 g of cobalt carbonate, 5 g of molybdenum oxide, and 7 g of citric acid in 40 g of water was prepared and was heated for the complete dissolution of the salts therein. The metals in the solution were then impregnated on 13 g of nanorod gamma alumina already containing 3% of HY zeolite (surface area of 500 m²/g and pore volume of 1.8 cm³/g) that was extruded to a mesh size range of 10-20. The resulting catalyst was then dried for 24 hours in 100°C and was named C.1.

### Example 2: The effect of phosphorous and citric acid in the absence of zeolite

A solution of 3 g of cobalt carbonate, 5 g of molybdenum oxide, 7 g of citric acid and 1.6 g of phosphoric acid in 40 g of water was prepared and was heated for the complete dissolution of the salts therein. The metals in the solution were then impregnated on 13 g of nano-rod gamma alumina (surface area of 500 m²/g and pore volume of 1.8 cm³/g) that was extruded to a mesh size range of 10-20. The resulting catalyst was then dried for 24 hours in 100°C and was named C.2.

### Example 3: The effect of citric acid in the presence of zeolite and phosphorous

A solution of 3 g of cobalt carbonate, 5 g of molybdenum oxide, 7 g of citric acid and 1.6 g of phosphoric acid in 40 g of water was prepared and was heated for the complete dissolution of the salts therein. The metals in the solution were then impregnated on 13 g of nano-rod gamma alumina already containing 3% of HY zeolite (surface area of 500 m²/g and pore volume of 1.8 cm³/g) that was extruded to a mesh size range of 10-20. The resulting catalyst was then dried for 24 hours in 100°C. Based on the tests performed under different pressures of 2-4 MPa the catalysts were named C3-1, C3-2, C3-3 and C3-4.

### Example 4: The effect of a total of 22% of MoO₃ and CoO in the presence of citric acid, zeolite and phosphorous

A solution of 4 g of cobalt carbonate, 6 g of molybdenum oxide, 8 g of citric acid and 1.6 g of phosphoric acid in 40 g of water was prepared and was heated for the complete dissolution of the salts therein. The metals in the solution were then impregnated on 13 g of nano-rod gamma alumina already containing 3% of HY zeolite (surface area of 500 m²/g and pore volume of 1.8 cm³/g) that was extruded to a mesh size range of 10-20. The resulting catalyst was then dried for 24 hours in 100°C. Based on the tests performed under different pressures of 2-4 MPa the catalysts were named C4-1 - C4-11.

### Example 5: The effect of the amount of phosphorous in the presence of citric acid and zeolite

A solution of 3 g of cobalt carbonate, 5 g of molybdenum oxide, 7 g of citric acid and 2 g of phosphoric acid in 40 g of water was prepared and was heated for the complete dissolution of the salts therein. The metals in the solution were then impregnated on 13 g of nano-rod gamma alumina already containing 3% of HY zeolite (surface area of 500 m²/g and pore volume of 1.8 cm³/g) that was extruded to a mesh size range of 10-20. The resulting catalyst was then dried for 24 hours in 100°C. The catalyst was named C.5.

### Example 6: The effect of the presence of B in the presence of citric acid and zeolite

A solution of 3 g of cobalt carbonate, 5 g of molybdenum oxide, 7 g of citric acid and 0.8 g of boric acid in 40 g of water was prepared and was heated for the complete dissolution of the salts therein. The metals in the solution were then impregnated on 13 g of nano-rod gamma alumina already containing 3% of HY zeolite (surface area of 500 m²/g and pore volume of 1.8 cm³/g) that was extruded to a mesh size range of 10-20. The resulting catalyst was then dried for 24 hours in 100°C. The catalyst was named C.6.

### Example 7: The effect of the presence of B in the presence of citric acid, zeolite and phosphorous

A solution of 3 g of cobalt carbonate, 5 g of molybdenum oxide, 7 g of citric acid, 1.8 g phosphoric acid and 0.8 g of boric acid in 40 g of water was prepared and was heated for the complete dissolution of the salts therein. The metals in the solution were then impregnated on 13 g of nano-rod gamma alumina already containing 3% of HY zeolite (surface area of 500 m²/g and pore volume of 1.8 cm³/g) that was extruded to a mesh size range of 10-20. The resulting catalyst was then dried for 24 hours in 100°C. The catalyst was named C.7.

### Example 8: The effect of an amount of 16% wt of MoO₃ and CoO in the presence of citric acid, zeolite and phosphorous

A solution of 3 g of cobalt carbonate, 4 g of molybdenum oxide, 6 g of citric acid, 1.6 g phosphoric acid in 40 g of water was prepared and was heated for the complete dissolution of the salts therein. The metals in the solution were then impregnated on 13 g of nano-rod gamma alumina already containing 3% of HY zeolite (surface area of 500 m²/g and pore volume of 1.8 cm³/g) that was extruded to a mesh size range of 10-20. The resulting catalyst was then dried for 24 hours in 100°C. The catalyst was named C.8-1 to C.8-3.

### Example 9: Evaluation of catalyst properties

Catalysts C.1 to C.8 were tested for the diesel hydrocarbon fractions containing 13500 ppm of sulfur compounds as described in table 2 in a fixed bed reactor as described above under identical operating conditions. 7 ml of the catalyst was used in the tests. All catalysts were sulfidized with an isomax feed containing 1% wt of dimethyl sulfide.

**Table 2-The properties of the diesel feed used**

| | |
|---|---|
| Density at (15 °C)g/cm³ | 0.8500 |
| Color (ASTM D156) | +1.5 |
| Sulfur (mass ppm) | 13500 |
| (Distillation) | 160 to 390 °C |
| IBP at 760 mmHg | 160 °C |
| 5% Vol. | 182 °C |
| 10% Vol. | 198 °C |
| 20% Vol. | 224 °C |
| 30% Vol. | 249 °C |
| 40% Vol. | 269 °C |
| 50% Vol. | 286 °C |
| 60% Vol. | 302 °C |
| 70% Vol. | 316 °C |
| 80% Vol. | 333 °C |
| 90% Vol. | 355 °C |
| 95% Vol. | 372 °C |
| FBP | 390 °C |

The reactor temperature was initially increased to 180°C with a ramp of 40°C /h using the hydrogen stream, before the injection of the sulfidation feed after which the temperature was raised to 260°C with a ramp of 20°C /h and then to 310°C with a ramp of 10°C /h. The reaction is continued for 12 hours in this temperature, and the H₂/hydrocarbon feed ratio and pressure are kept at 200 Nm³/m³ and 3 MPa during the reaction time.

In the next step, the diesel fuel is injected into the reactor and the reaction conditions are 320-350°C and 1.5 to 7 MPa with an LHSV of 0.8-2 h⁻¹ and H₂/hydrocarbon feed ratio of 170-200 Nm³/m³. The reaction is continued for 96 hours and the feed is changed and analyzed in 24 hour intervals. The desulfurization activities are shown in table 4.

Comparisons between the operating conditions of the sulfidation and hydrodesulfurization processes, metal loading of the catalysts, the amount of additives and the outlet sulfur content for catalysts of the present invention and prior art catalysts are made in table 3.

EP 0 969 075 A1 uses an H₂S/H₂ gas mixture for the sulfidation of the catalyst and US 2002/0070147 A1 uses a 2.5% wt dimethyl sulfoxide solution, the former being non-economical and the latter being more concentrated than the solution used in the present invention (1% wt dimethyl sulfoxide solution). The comparison shows the higher and better activity of the catalyst of the present invention. The operating conditions of the process of the present invention are relatively mild leading to better results. The best catalyst disclosed in EP 1 832 645 A1 contains a total metal loading of 16% wt, and works at a very high pressure of 7 MPa, temperature of 345°C, high H₂/Feed ratio of 440 NL/L with a low LHSVof 1.2 h⁻¹ reducing the sulfur content of the feed from 11600 ppm to 6.5 ppm. This is while the nanocatalysts C.4-11 of the present invention, having a loading of 22% wt works under much lower pressures of 3.4 MPa, temperature of 340°C, lower H₂/Feed ratio of 200 NL/L, and higher LHSV of 2 h⁻¹ reducing the sulfur content of the feed from 13500 ppm to 5 ppm. Also the other nanocatalysts C.8-3, containing 16% of the metals, still works well under pressures of 4.5 MPa, temperature of 340°C, lower H₂/Feed ratio of 200 NL/L, and higher LHSV of 2 h⁻¹ reducing the sulfur content of the feed from 13500 ppm to 5 ppm.

US 2002/0070147 A1 containing a total metal loading of 25% wt, 3% wt of P₂O₅ is claimed to work at 330°C, under a pressure of 4 MPa, high H₂/Feed ratio of 300 NL/L and reduces the sulfur content of the feed from 12000ppm to 21 ppm, while catalyst C3-2 of this invention (which is not the best catalyst composition) having a less metal loading of 20% wt works under milder operating conditions of 3 MPa, 330°C and H₂/Feed ratio of 200 NL/L, yet reducing the sulfur content of the feed from 13500ppm to 20 ppm. Also nanocatalyst C.7, with the same properties of C3-3, works under milder operating conditions of 3.5 MPa, 330°C and a H₂/Feed ratio of 200 NL/L, and reduces the sulfur content of the feed from 13500ppm to 11 ppm most probably due to the presence of phosphorous and boron at the same time.

Nanocatalyst C3-4 tested at the same conditions as US 2002/0070147 A1 but still with lower H2/Feed ratios, reduces the sulfur content of the feed from 13500 ppm to 14 ppm. Another catalyst in US 2002/0070147 A1 having a total metal loading of 25% wt, and working under operating conditions of 340°C, 2 MPa, H₂/Feed=300, LHSV=1.5 h⁻¹ does not have good desulfurization properties reducing the sulfur content from 12000 ppm only to 51 ppm while nanocatalyst C3-1 of this invention (still not being the best catalyst and not working under the optimum operating conditions) working under 330°C, 2 MPa, H₂/Feed=200, LHSV=2 h⁻¹ reduces sulfur from 13500 ppm to 39 ppm.

All catalysts in EP 0 969 075 A1 show relatively worse behaviors when compared to those of the present invention. The best catalyst (i.e. B1) has a total metal, phosphorous and zeolite loading of 25% wt, 3% and 5% wt respectively, and is reported to work under 350°C, 3.5 MPa and LHSV=1.5h⁻¹ but reduces the sulfur content of the feed from 13500 ppm to 140 ppm, which is a yield far more than that of even nanocatalyst C1 of the present invention which reduces the sulfur content from 13500 ppm to 47 ppm under milder operating conditions.

A previous invention disclosed in the patent application EP 08 170 413.2 encompasses a CoMoCNT catalyst with a total metal loading of 25% wt, 5% wt of P₂O₅ and works at 350°C and pressure of 5 MPa and LHSV=1.5h⁻¹ reduces the sulfur content of the feed from 13500 ppm to 200 ppm, which is not comparable with the results of this catalyst, either.

| Table 3- Comparison between the catalyst of the present invention and those of the prior art | | | | | | | | | | | |
|---|---|---|---|---|---|---|---|---|---|---|---|
| Pat. No. | MoO3 + CoO | Additives | | | Reaction Conditions | | | | Sulfur Feed (ppm) | Sulfur Product (ppm) | Cat. |
| | (wt%) | P₂O₅ (wt%) | B₂O₃ (wt%) | Zeolite (wt%) | Tem. (°C) | Pressure (MPa) | LHSV (h⁻¹) | H₂/Oil ratio (Ncm³/cm³) | | | |
| EP0969075A1 | 13 | 3 | - | 5 | 340 | 3.5 | 1.5 | - | 13500 | 329 | P |
| EP0969075A1 | 20 | 3 | - | 5 | 340 | 3.5 | 1.5 | - | 13500 | 232 | D |
| EP0969075A1 | 23 | 3 | - | 5 | 340 | 3.5 | 1.5 | - | 13500 | 228 | K |
| EP0969075A1 | 25 | - | - | - | 340 | 3.5 | 1.5 | - | 13500 | 319 | M |
| EP0969075A1 | 25 | - | - | - | 350 | 3.5 | 1.5 | - | 13500 | 310 | G1 |
| EP0969075A1 | 25 | - | - | 5 | 340 | 3.5 | 1.5 | - | 13500 | 273 | O |
| EP0969075A1 | 25 | - | - | 5 | 350 | 3.5 | 1.5 | - | 13500 | 220 | I1 |
| EP0969075A1 | 25 | 3 | - | - | 340 | 3.5 | 1.5 | - | 13500 | 271 | N |
| EP0969075A1 | 25 | 3 | - | - | 350 | 3.5 | 1.5 | - | 13500 | 230 | H1 |
| EP0969075A1 | 25 | 3 | - | 5 | 340 | 3.5 | 1.5 | - | 13500 | 209 | L |
| EP0969075A1 | 25 | 3 | - | 5 | 350 | 3.5 | 1.5 | - | 13500 | 140 | B1 |
| EP0969075A1 | 27 | 3 | - | 5 | 340 | 3.5 | 1.5 | - | 13500 | 222 | J |
| EP0969075A1 | 30 | 3 | - | 5 | 340 | 3.5 | 1.5 | - | 13500 | 228 | E |
| WO99/67345 | 20.44 | - | - | - | 300 | 5.88 | 1.88 | 170 | 12286 | 3943 | example 12 |
| WO99/67345 | 20.44 | - | - | - | 320 | 5.88 | 1.88 | 170 | 12286 | 1960 | example 12 |
| WO99/67345 | 20.44 | - | - | - | 340 | 5.88 | 1.88 | 170 | 12286 | 756 | example 12 |
| WO99/67345 | 20.44 | - | - | - | 324 | 4 | 1.35 | 250 | 12286 | 1348 | example 15 |
| WO99/67345 | 20.44 | - | - | - | 334 | 4 | 1.35 | 250 | 12286 | 684 | example 15 |
| WO99/67345 | 20.44 | - | - | - | 354 | 4 | 1.35 | 250 | 12286 | 115 | example 15 |
| US2002/007014 7A1 | 25 | 7 | - | - | 330 | 4 | 2 | 300 | 12000 | 21 | example 1 |
| US2002/007014 7A1 | 25 | 7 | - | - | 340 | 2 | 1.5 | 300 | 12000 | 51 | example 1 |
| EP1832645A1 | 16 | - | - | - | 345 | 7 | 1.2 | 440 | 11600 | 6.5 | EXAMPLES |
| This invention | 20 | - | - | 3 | 330 | 3.5 | 2 | 200 | 13500 | 47 | C.1 |

| Table 3- Comparison between the catalyst of the present invention and those of the prior art | | | | | | | | | | | |
|---|---|---|---|---|---|---|---|---|---|---|---|
| Pat. No. | MoO3 + CoO | Additives | | | Reaction Conditions | | | | Sulfur Feed (ppm) | Sulfur Product (ppm) | Cat. |
| | (wt%) | P₂O₅ (wt%) | B₂O₃ (wt%) | Zeolite (wt%) | Tem. (°C) | Pressure (MPa) | LHSV (h⁻¹) | H₂/Oil ratio (Ncm³/cm³) | | | |
| This invention | 20 | 5 | - | - | 330 | 3.5 | 2 | 200 | 13500 | 45 | C.2 |
| This invention | 20 | 5 | - | 3 | 330 | 2 | 2 | 200 | 13500 | 39 | C.3-1 |
| This invention | 20 | 5 | - | 3 | 330 | 3 | 2 | 200 | 13500 | 20 | C.3-2 |
| This invention | 20 | 5 | - | 3 | 330 | 3.5 | 2 | 200 | 13500 | 17 | C.3-3 |
| This invention | 20 | 5 | - | 3 | 330 | 4 | 2 | 200 | 13500 | 14 | C.3-4 |
| This invention | 22 | 5 | - | 3 | 330 | 2 | 2 | 200 | 13500 | 35 | C.4-1 |
| This invention | 22 | 5 | - | 3 | 335 | 2 | 2 | 200 | 13500 | 31 | C.4-2 |
| This invention | 22 | 5 | - | 3 | 340 | 2 | 2 | 200 | 13500 | 27 | C.4-3 |
| This invention | 22 | 5 | - | 3 | 345 | 2 | 2 | 200 | 13500 | 23 | C.4-4 |
| This invention | 22 | 5 | - | 3 | 350 | 2 | 2 | 200 | 13500 | 19 | C.4-5 |
| This invention | 22 | 5 | - | 3 | 335 | 3 | 2 | 200 | 13500 | 19 | C.4-6 |
| This invention | 22 | 5 | - | 3 | 335 | 3.5 | 2 | 200 | 13500 | 16 | C.4.7 |
| This invention | 22 | 5 | - | 3 | 335 | 4 | 2 | 200 | 13500 | 14 | C.4.8 |
| This invention | 22 | 5 | - | 3 | 335 | 4.5 | 2 | 200 | 13500 | 8 | C.4.9 |
| This invention | 22 | 5 | - | 3 | 335 | 5 | 2 | 200 | 13500 | 6 | C.4.10 |
| This invention | 22 | 5 | - | 3 | 340 | 3.5 | 2 | 200 | 13500 | 5 | C.4.11 |
| This invention | 20 | 3.5 | - | 3 | 330 | 3.5 | 2 | 200 | 13500 | 24 | C.5 |
| This invention | 20 | - | 5 | 3 | 330 | 3.5 | 2 | 200 | 13500 | 21 | C.6 |
| This invention | 20 | 5 | 5 | 3 | 330 | 3.5 | 2 | 200 | 13500 | 11 | C.7 |
| This invention | 16 | 5 | | 3 | 330 | 3.5 | 2 | 200 | 13500 | 30 | C.8-1 |
| This invention | 16 | 5 | - | 3 | 340 | 3 | 2 | 200 | 13500 | 13 | C.8-2 |
| This invention | 16 | 5 | - | 3 | 340 | 4.5 | 2 | 200 | 13500 | 5 | C.8-3 |
| EP08170413.2 | 25 | 5 | - | - | 350 | 5 | 1.5 | 200 | 13500 | 200 | CoMoCNT |

## Claims

1. A hydrodesulfurization nanocatalyst comprising:
- a nanostructured alumina material
- at least one metal selected from the group VI B of the periodic table of elements, and
- at least one metal selected from the group VIII B of the periodic table of elements.

2. The hydrodesulfurization nanocatalyst according to claim 1, wherein the nanostructured alumina material is selected from the group consisting of alumina nanorods, alumina nanotubes and mixtures thereof.

3. The hydrodesulfurization nanocatalyst according to claims 1 or 2, wherein the alumina is gamma-alumina.

4. The hydrodesulfurization nanocatalyst according to one or more of the preceding claims, wherein the nanostructured alumina material has a surface area of 450 to 800 m²/g.

5. The hydrodesulfurization nanocatalyst according to one or more of the preceding claims, wherein the nanostructured alumina material has a pore volume of 0.8 to 3 cm³/g.

6. The hydrodesulfurization nanocatalyst according to one or more of the preceding claims, wherein nanostructured alumina material has a mesoporous pore diameter of 9 to 30 nm.

7. The hydrodesulfurization nanocatalyst according to one or more of the preceding claims, wherein the content of the VIB and VIIIB metals in the nanocatalyst is 1 to 30 % by weight.

8. The hydrodesulfurization nanocatalyst according to one or more of the preceding claims, wherein the VIB metal is molybdenum and/or tungsten.

9. The hydrodesulfurization nanocatalyst according to one or more of the preceding claims, wherein the group VIIIB metal is nickel and/or cobalt.

10. The hydrodesulfurization nanocatalyst according to one or more of the preceding claims, wherein the catalyst comprises zeolite Y.

11. The hydrodesulfurization nanocatalyst according to one or more of the preceding claims, wherein the catalyst comprises P₂O₅ and/or B₂O₃.

12. Use of the catalyst according to one or more of the preceding claims in a hydrodesulfurization process.

13. A process for the production of a hydrodesulfurization nanocatalyst according to claims 1 to 11, comprising the steps of:
a) Providing a solution of at least one metal
b) Impregnating a nanostructured alumina material in the solution of at least one metal
c) Drying the resulting catalyst

## Amended claims

### Amended claims in accordance with Rule 137(2) EPC.

**1.** A hydrodesulfurization nanocatalyst comprising:
- a nanostructured alumina material
- at least one metal selected from the group VI B of the periodic table of elements, and
- at least one metal selected from the group VIII B of the periodic table of elements; wherein the nanocatalyst further comprises at least one group III A and/or V A compound and zeolite (page 8, paragraph 2, page 9, paragraphs 2 and 3).

**2.** The hydrodesulfurization nanocatalyst according to claim 1, wherein the nanostructured alumina material is selected from the group consisting of alumina nanorods, alumina nanotubes and mixtures thereof.

**3.** The hydrodesulfurization nanocatalyst according to claims 1 or 2, wherein the alumina is gamma-alumina.

**4.** The hydrodesulfurization nanocatalyst according to one or more of the preceding claims, wherein the nanostructured alumina material has a surface area of 450 to 800 m²/g_{.}

**5.** The hydrodesulfurization nanocatalyst according to one or more of the preceding claims, wherein the nanostructured alumina material has a pore volume of 0.8 to 3 cm³/g_{.}

**6.** The hydrodesulfurization nanocatalyst according to one or more of the preceding claims, wherein nanostructured alumina material has a mesoporous pore diameter of 9 to 30 nm.

**7.** The hydrodesulfurization nanocatalyst according to one or more of the preceding claims, wherein the content of the VIB and VIIIB metals in the nanocatalyst is 1 to 30 % by weight.

**8.** The hydrodesulfurization nanocatalyst according to one or more of the preceding claims, wherein the VIB metal is molybdenum and/or tungsten.

**9.** The hydrodesulfurization nanocatalyst according to one or more of the preceding claims, wherein the group VIIIB metal is nickel and/or cobalt.

**10.** The hydrodesulfurization nanocatalyst according to one or more of the preceding claims, wherein the zeolite is zeolite Y.

**11.** The hydrodesulfurization nanocatalyst according to one or more of the preceding claims, wherein the at least one V A compound is P₂O₅.

**12.** The hydrodesulfurization nanocatalyst according to one or more of the preceding claims, wherein the at least one III A compound is B₂O₃.

**13.** Use of the catalyst according to one or more of the preceding claims in a hydrodesulfurization process.

**14.** A process for the production of a hydrodesulfurization nanocatalyst according to claims 1 to 12, comprising the steps of:
a) Providing a solution of at least one metal
b) Impregnating a nanostructured alumina material in the solution of at least one metal
c) Drying the resulting catalyst
